(19) Europäisches Patentamt
European Patent Office
Office européen des brevets

(11) EP 2 976 392 B1

(12) # FASCICULE DE BREVET EUROPEEN

(45) Date de publication et mention de la délivrance du brevet:
**25.04.2018 Bulletin 2018/17**

(21) Numéro de dépôt: **14713548.7**

(22) Date de dépôt: **12.03.2014**

(51) Int Cl.:
***C09C 3/10*** (2006.01)
***C09C 1/36*** (2006.01)
***C09C 1/02*** (2006.01)
***B82Y 30/00*** (2011.01)
***C09D 5/02*** (2006.01)
***C09D 7/12*** (2006.01)
***C09D 133/06*** (2006.01)
***C08L 33/08*** (2006.01)

(86) Numéro de dépôt international:
**PCT/FR2014/050549**

(87) Numéro de publication internationale:
**WO 2014/147321 (25.09.2014 Gazette 2014/39)**

(54) **UTILISATION D'UNE ÉMULSION POLYMERIQUE POUR TRAITER EN SURFACE DES PARTICULES DE MATIÈRES MINÉRALES**

VERWENDUNG EINER POLYMEREMULSION ZUR OBERFLÄCHENBEHANDLUNG VON PARTIKELN EINES ANORGANISCHEN MATERIALS

USE OF A POLYMERIC EMULSION FOR THE SURFACE TREATMENT OF THE PARTICLES OF AN INORGANIC MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2013 FR 1352379**
**20.03.2013 US 201361803550 P**

(43) Date de publication de la demande:
**27.01.2016 Bulletin 2016/04**

(73) Titulaires:
- **COATEX**
**69730 Genay (FR)**
- **Omya International AG**
**4665 Oftringen (CH)**

(72) Inventeurs:
- **RUHLMANN, Denis**
**F-69730 Genay (FR)**
- **GUERRET, Olivier**
**F-46170 Pern (FR)**
- **MONGOIN, Jacques**
**F-69650 Quincieux (FR)**
- **MCJUNKINS, Joe**
**Cleveland, OH 44102 (US)**
- **FOUAL, Djillali**
**CH-4665 Oftringen (CH)**
- **FELLER, Marc**
**CH-3665 Wattenwil (CH)**
- **RENTSCH, Samuel**
**CH-4663 Aarburg (CH)**

(74) Mandataire: **Balmefrezol, Ludovic Francis Pierre et al**
**Coatex SAS**
**35, rue Ampère**
**69730 Genay (FR)**

(56) Documents cités:
**WO-A1-2010/001206**
**WO-A1-2013/064761**
**WO-A1-2013/064763**
**US-A1- 2011 107 803**
**US-A1- 2011 230 387**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 976 392 B1

**Description**

**DOMAINE DE L'INVENTION**

La présente invention se rapporte à l'utilisation d'une nouvelle émulsion aqueuse polymérique pour traiter en surface des particules de matière minérale.

**ARRIERE PLAN DE L'INVENTION**

De manière générale, les particules de matière minérale sont utilisées comme charge inorganique dans une variété d'applications et notamment dans les formulations de peinture. Les formulations de peinture contiennent également plusieurs autres constituants ayant chacun une fonction définie au sein de la formulation, et notamment des épaississants dont la fonction est de maîtriser la rhéologie des formulations, tant au stade de leur fabrication, que pendant leur transport, leur stockage ou au cours de leur mise en oeuvre. La diversité des contraintes pratiques au niveau de chacune de ces étapes renvoie à une multiplicité de comportements rhéologiques différents.

Il existe une grande variété d'épaississants pour peinture.

Parmi ceux-ci, on peut citer les épaississants naturels à base de cellulose du type HEC (hydroxyéthylcellulose). On peut également citer les épaississants dits « associatifs », et notamment les épaississants associatifs de nature acrylique notamment décrits dans les documents EP 0 577 526 A1, EP 1 778 797 A1, EP 2 108 007 A1, EP 2 114 378 A1, EP 2 303 982 A1, FR 2 950 061 A1 et FR 2 956 862 A1.

Le document US 2011 0107803 concerne une formulation aqueuse de pigment et d'un agent dispersant ou d'un mélange d'agents dispersants. Des agents dispersants copolymères de l'acide acrylique, de méthacrylate et de chaînes hydrophobes alkoxylées sont mentionnés.

Le document WO 2010 001206 décrit l'utilisation, comme agent épaississant d'une formulation aqueuse, d'un copolymère hydrosoluble ou alcali-soluble notamment préparé à partir d'acide méthacrylique, d'acrylate d'éthyle, d'un monomère hydrophobe et d'éthylèneglycoldiméthacrylate comme réticulant.

Les épaississants de type HASE sont traditionnellement ajoutés en fin de formulation des peintures (post addition) ou alternativement en deux étapes (en début de formulation à l'empattage et en post addition). Le formulateur de peinture cherche en effet classiquement à obtenir une viscosité suffisamment élevée pendant l'empattage et peut pour se faire additionner tout ou partie de l'épaississant lors de l'empattage. Dans une optique de simplification du procédé de fabrication, il est prêt à considérer toute solution permettant d'obtenir des viscosités élevées sans avoir à ajouter d'additifs.

Il existe aujourd'hui une demande de la part des formulateurs de simplifier le travail de formulation des peintures. Egalement, pour des raisons de coût, il est demandé de réduire la quantité d'additifs dans les formulations.

La présente invention s'inscrit dans ce contexte.

Plus précisément, un objet de la présente invention consiste en l'utilisation d'une émulsion aqueuse polymérique épaississante pour traiter en surface des particules de matière minérale.

Ce faisant, on simplifie le travail du formulateur de peinture par suppression d'un composé à introduire.

En outre, les inventeurs ont constaté qu'en utilisant lesdites particules de matière minérale traitées en surface, il était possible de réduire la quantité totale d'épaississants nécessaire par rapport à l'introduction indépendante des particules de matière minérale puis de l'épaississant, tout en conservant le même profil rhéologique.

De plus, les inventeurs ont constaté que les valeurs de brillance des peintures contenant de telles particules de matière minérale traitées étaient très largement améliorées par rapport aux peintures dans lesquelles les particules de matière minérale ont été introduites de manière indépendante de l'épaississant.

L'émulsion aqueuse polymérique utilisée dans le cadre de la présente invention a fait l'objet de deux demandes de brevet déposées au nom de COATEX sous les numéros WO 2013/064761 et WO 2013/064763.

**DESCRIPTION DE L'INVENTION**

*Emulsion aqueuse pour traiter en surface des particules de matière minérale :*

Un premier objet de la présente invention consiste en l'utilisation d'une émulsion aqueuse polymérique pour traiter en surface des particules de matière minérale.

Dans le cadre de la présente invention, et pour l'ensemble des objets revendiqués, ladite émulsion aqueuse polymérique utilisée pour traiter les particules de matière minérale est obtenue par polymérisation de :

i) au moins des monomères d'acide acrylique et/ou d'acide méthacrylique,
ii) au moins des monomères d'acrylate d'alkyle et/ou de méthacrylate d'alkyle,

iii) au moins des monomères possédant au moins un groupement hydrophobe, ledit groupement hydrophobe de ces monomères comportant entre 6 et 100 atomes de carbone, et présentant une formule (II) :

R'- A - R" (II)

dans laquelle :

- A représente une chaîne polymérique constituée de :
  - m motifs d'oxyde d'alkylène de formule $-CH_2CHR_1O-$ avec $R_1$ représentant un groupement alkyle comprenant de 1 à 4 carbones, et m variant de 0 à 150,
  - p motifs d'oxyde d'alkylène de formule $-CH_2CHR_2O-$ avec $R_2$ représentant un groupement alkyle comprenant de 1 à 4 carbones, et p variant de 0 à 150,
  - n motifs d'oxyde d'éthylène avec n variant de 0 à 150,
    dans laquelle m+n+p > 4 et dans laquelle les motifs d'oxyde d'alkylène de formule $-CH_2CHR_1O-$, les motifs d'oxyde d'alkylène de formule - $CH_2CHR_2O-$ et les motifs d'oxyde d'éthylène sont en bloc, alternés ou statistiques ;

- R' représente un radical contenant une fonction insaturée polymérisable, choisi dans le groupe consistant en les esters acryliques, les esters méthacryliques, les esters maléiques, les esters itaconiques, les esters crotoniques, l'acryluréthanne, le méthacryluréthanne, l'$\alpha$-$\alpha$' diméthyl-isopropényl-benzyluréthanne, l'allyluréthanne, les éthers allyliques, les éthers vinyliques, les amides et les imides ; et
- R" représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone ;

en présence, pendant ladite polymérisation de :
iv) au moins un polyglycérol de formule :

$$RO - (C_3H_6O_2)_n - H \qquad (I)$$

dans laquelle :

- R représente l'hydrogène, un groupement carboné comportant entre 8 à 22 atomes de carbone ou un groupement ester fonctionnalisé par un groupement carboné comportant entre 8 à 22 atomes de carbone et
- n représente un nombre entier ou décimal supérieur à 1,

v) au moins un agent tensio-actif anionique.

Par «au moins des monomères d'acide acrylique et/ou d'acide méthacrylique » (monomère i)), on entend que l'émulsion comprend au moins des monomères d'acide acrylique, au moins des monomères d'acide méthacrylique ou au moins un mélange de monomères d'acide acrylique et d'acide méthacrylique. L'émulsion peut, en outre, comprendre d'autres monomères, notamment d'autres monomères anioniques présentant une fonction vinylique polymérisable et un groupement carboxyle.

Selon un mode de réalisation de la présente invention, l'émulsion comprend exclusivement en tant que monomères anioniques présentant une fonction vinylique polymérisable et un groupement carboxyle, des monomères d'acide méthacrylique.

Par «au moins des monomères d'acrylate d'alkyle et/ou de méthacrylate d'alkyle» (monomère ii)), on entend que l'émulsion comprend au moins des monomères d'acrylate d'alkyle, au moins des monomères de méthacrylate d'alkyle ou au moins un mélange de monomères d'acrylate d'alkyle et de méthacrylate d'alkyle. L'émulsion peut, en outre, comprendre d'autres monomères, notamment d'autres monomères hydrophobes non ioniques présentant une fonction vinylique polymérisable. Parmi ceux-ci, on peut citer les esters, les amides ou les nitriles des acides acryliques ou méthacryliques, par exemple l'acrylonitrile, l'acétate de vinyle, le styrène, le méthylstyrène, le diisobutylène, la vinylpyrrolidone ou la vinylcaprolactame.

Par « alkyle », on entend un groupe $C_mH_{2m+1}$, linéaire ou ramifié, où m varie de 1 à 10, par exemple de 1 à 6, ou de 1 à 3 ou 1 à 2.

Selon un mode de réalisation de la présente invention, l'émulsion comprend exclusivement en tant que monomères hydrophobes non ioniques présentant une fonction vinylique polymérisable, des monomères d'acrylates d'éthyle.

Par « au moins des monomères possédant au moins un groupement hydrophobe, ledit groupement hydrophobe de ces monomères possédant entre 6 et 100 atomes de carbone » (monomères iii)), on entend que l'émulsion aqueuse polymérique comprend des monomères qui notamment possèdent un groupement hydrophobe constitué de 6 à 100 atomes de carbone.

Selon un mode de réalisation de la présente invention, ledit groupement hydrophobe des monomères iii) représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone.

Selon un autre mode de réalisation de la présente invention, ledit groupement hydrophobe des monomères iii) représente une chaîne hydrocarbonée linéaire, branchée ou ramifiée comprenant de 6 à 40 atomes de carbone, par exemple de 6 à 30 atomes de carbone ou de 6 à 20 atomes de carbone.

Selon un autre mode de réalisation encore, ledit groupement hydrophobe des monomères iii) représente un groupement cycloalkyle ou aryle substitué, ou non substitué, comprenant de 6 à 100 atomes de carbone, par exemple de 6 à 60 atomes de carbone ou de 6 à 50 atomes de carbone.

Selon l'invention, lesdits monomères, possédant au moins un groupement hydrophobe dans lequel ledit groupement hydrophobe possède entre 6 et 100 atomes de carbone (monomères iii)), constitutifs de ladite émulsion aqueuse obtenue par polymérisation, présentent une formule (II) :

$$R' - A - R'' \qquad (II)$$

dans laquelle :

- A représente une chaîne polymérique constituée de :
  - m motifs d'oxyde d'alkylène de formule $-CH_2CHR_1O-$ avec $R_1$ représentant un groupement alkyle comprenant de 1 à 4 carbones, et m variant de 0 à 150,
  - p motifs d'oxyde d'alkylène de formule $-CH_2CHR_2O-$ avec $R_2$ représentant un groupement alkyle comprenant de 1 à 4 carbones, et p variant de 0 à 150,
  - n motifs d'oxyde d'éthylène avec n variant de 0 à 150, dans laquelle $m+n+p > 4$ et dans laquelle les motifs d'oxyde d'alkylène de formule :
    $-CH_2CHR_1O-$, les motifs d'oxyde d'alkylène de formule $-CH_2CHR_2O-$ et les motifs d'oxyde d'éthylène sont en bloc, alternés ou statistiques ;
- R' représente un radical contenant une fonction insaturée polymérisable, choisi dans le groupe consistant en les esters acryliques, les esters méthacryliques, les esters maléiques, les esters itaconiques, les esters crotoniques, l'acryluréthanne, le méthacryluréthanne, l'α-α' diméthyl-isopropényl-benzyluréthanne, l'allyluréthanne, les éthers allyliques, les éthers vinyliques, les amides et les imides ; et
- R'' représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone.

Selon un mode de réalisation de la présente invention, lesdits des monomères possédant au moins un groupement hydrophobe dans lequel ledit groupement hydrophobe possède entre 6 et 100 atomes de carbone (monomères iii)), constitutifs de ladite émulsion aqueuse obtenue par polymérisation, présentent une formule (II) :

$$R' - A - R'' \qquad (II)$$

dans laquelle :

- A représente une chaîne polymérique constituée de :
  - m' motifs d'oxyde de propylène de formule $-CH_2CHR_1O-$ avec $R_1$ représentant un groupement méthyle, et m variant de 0 à 150,
  - n motifs d'oxyde d'éthylène avec n variant de 0 à 150,
  - p égale 0,
    dans laquelle $m+n+p > 4$ et dans laquelle les motifs d'oxyde de propylène et les motifs d'oxyde d'éthylène sont en bloc, alternés ou statistiques ;
- R' représente un radical contenant une fonction insaturée polymérisable, choisi dans le groupe consistant en les esters acryliques, les esters méthacryliques, les esters maléiques, les esters itaconiques, les esters crotoniques,

l'acryluréthanne, le méthacryluréthanne, l'$\alpha$-$\alpha$' diméthyl-isopropényl-benzyluréthanne, l'allyluréthanne, les éthers allyliques, les éthers vinyliques, les amides et les imides ; et

- R" représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone.

Selon un mode de réalisation de la présente invention, le groupe R' du monomère R'- A - R" de formule (II) représente un radical contenant une fonction insaturée polymérisable, appartenant au groupe des esters acrylique, méthacrylique, maléique, itaconique, ou crotonique.

Selon un mode de réalisation de la présente invention, le groupe R" du monomère R'- A - R" de formule (II) représente une chaîne hydrocarbonée linéaire, branchée ou ramifiée comprenant de 6 à 40 atomes de carbone, par exemple de 6 à 30 atomes de carbone ou de 6 à 20 atomes de carbone.

Selon un autre mode de réalisation de la présente invention, dans le monomère R'- A - R" de formule (II) :

- R' représente un radical contenant une fonction insaturée polymérisable, appartenant au groupe des esters acrylique, méthacrylique, maléique, itaconique, ou crotonique, et
- R" représente une chaîne hydrocarbonée linéaire, branchée ou ramifiée comprenant de 6 à 40 atomes de carbone, par exemple de 6 à 30 atomes de carbone ou de 6 à 20 atomes de carbone.

Selon un autre mode de réalisation de la présente invention, dans le monomère R'- A - R" de formule (II) :

- A représente une chaîne polymérique constituée de :
  - m motifs d'oxyde de propylène de formule $-CH_2CHR_1O-$ avec $R_1$ représentant un groupement méthyle, et m variant de 0 à 150,
  - n motifs d'oxyde d'éthylène avec n variant de 0 à 150,
  - p égale 0,
  dans laquelle m+n+p > 4 et dans laquelle les motifs d'oxyde de propylène et les motifs d'oxyde d'éthylène sont en bloc, alternés ou statistiques,
- R' représente un radical contenant une fonction insaturée polymérisable, appartenant au groupe des esters acrylique, méthacrylique, maléique, itaconique, ou crotonique, et
- R" représente une chaîne hydrocarbonée linéaire, branchée ou ramifiée comprenant de 6 à 40 atomes de carbone.

Ainsi, l'émulsion utilisée dans le cadre de la présente invention est obtenue par polymérisation des au moins trois catégories différentes de monomères mentionnées précédemment, en présence, pendant ladite polymérisation, de, notamment, un polyglycérol de formule (I) ci-dessous :

$$RO - (C_3H_6O_2)_n - H \qquad (I)$$

dans laquelle :

- R représente l'hydrogène, un groupement carboné comportant entre 8 à 22 atomes de carbone ou un groupement ester fonctionnalisé par un groupement carboné comportant entre 8 à 22 atomes de carbone et
- n représente un nombre entier ou décimal supérieur à 1.

Dans le cadre de la présente invention, le polyglycérol de formule (I) est utilisé « pendant ladite polymérisation ». Il ne s'agit donc pas d'ajouter ledit polyglycérol à la solution polymérique après polymérisation. Les inventeurs ont en effet démontré qu'il s'agit là d'une caractéristique importante lors de la fabrication de l'émulsion utilisée dans le cadre de la présente invention. On peut se référer à cet égard aux deux demandes de brevet déposées au nom de COATEX sous les numéros WO 2013/064761 et WO 2013/064763.

Par « polyglycérol », on entend un composé dont le degré de polymérisation est supérieur à 1, ce degré pouvant être un nombre entier ou un nombre décimal. Le terme « polyglycérol » comprend les di-glycérols, les tri-glycérols... etc.

Par « groupement carboné », on entend un chaîne carbonée, saturée ou insaturée. Cette chaîne carbonée peut notamment comporter une ou plusieurs doubles liaisons.

Selon un mode de réalisation de la présente invention, R représente un groupement carboné insaturé comportant entre 8 à 22 atomes de carbone.

Selon un mode de réalisation de la présente invention, R représente un groupement carboné insaturé comportant une unique double liaison et entre 8 à 22 atomes de carbone.

Selon un autre mode de réalisation de la présente invention, R représente un groupement carboné insaturé comportant une unique double liaison et entre 15 à 22 atomes de carbone.

Dans le cadre de la présente invention, n désigne le degré de polymérisation moyen. Il s'agit d'un nombre entier ou d'un nombre décimal supérieur à 1.

Selon un mode de réalisation de la présente invention, n représente un nombre entier ou décimal compris entre 1 et 10.

Selon un autre mode de réalisation de la présente invention, n représente un nombre entier ou décimal compris entre 1 et 6, par exemple un nombre entier égal à 2 ou égal à 4.

Selon un mode de réalisation de la présente invention, un polyglycérol de formule (I) est tel que :

- R représente un groupement carboné insaturé comportant une unique double liaison et entre 8 à 22 atomes de carbone et
- n représente un nombre entier ou décimal compris entre 1 et 8.

La formule (I) du polyglycérol utilisé au cours de ladite polymérisation peut être déclinée sous les formes suivantes :

$$R - [CH(CH_2OH) - CH_2O]_n - H \qquad (III)$$

$$RO - (CH_2 - CHOH - CH_2O)_n - H \qquad (IV)$$

Alternativement, on représente la formule (III) de la manière suivante :

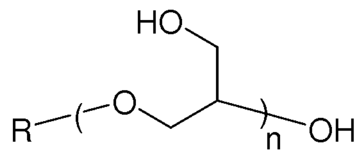

Ainsi, le motif répété dans la formule (I), c'est-à-dire le motif $C_3H_6O_2$, peut se présenter sous les formes suivantes : $CH_2 - CHOH - CH_2O$ (motif répété de la formule (IV)) ou $CH(CH_2OH) - CH_2O$ (motif répété de la formule (III)).

Dans les composés de formule (III) et (IV), R et n sont tels que ci-dessus définis (définition générale et différents modes de réalisation).
Ainsi :

- R représente l'hydrogène, un groupement carboné comportant entre 8 à 22 atomes de carbone ou un groupement ester fonctionnalisé par un groupement carboné comportant entre 8 à 22 atomes de carbone et
- n représente un nombre entier ou décimal supérieur à 1.

Ladite polymérisation a également lieu en présence d'un agent tensio-actif anionique (composé v)).

Selon un mode de réalisation de la présente invention, cet au moins un agent tensio-actif v) est choisi parmi le dodécyl sulfate de sodium, le di octyl sulfosuccinate de sodium et/ou le dodécyl benzène sulfonate de sodium. Ladite polymérisation peut ainsi avoir lieu en présence d'autres agents tensioactifs.

Selon un mode de réalisation de la présente invention, ladite polymérisation (étape a)) a lieu en présence d'un agent tensioactif non ionique additionnel qui est différent du composé iv).

Selon un autre mode de réalisation de la présente invention, ladite polymérisation (étape a)) a lieu en présence d'un agent tensioactif non ionique additionnel qui est différent du composé iv) choisi parmi les éthers d'alcools gras et de polyoxyéthylèneglycol et les esters de polyoxyéthylèneglycol.

Selon un mode de réalisation de l'invention, l'étape de polymérisation comprend les sous-étapes suivantes :

a1) on introduit dans un réacteur de synthèse de l'eau, puis les composés iv) et v),
a2) on chauffe le réacteur de synthèse à une température d'au moins 60°C,
a3) on introduit dans un réacteur de synthèse des composés initiateur de polymérisation, et
a4) on introduit dans un réacteur de synthèse les monomères i), ii) et iii), éventuellement de l'eau additionnelle, un ou plusieurs autres composés v) et/ou un agent de transfert de chaîne.

Par « composés initiateur de polymérisation » ou alternativement, de manière équivalente « système initiateur de polymérisation » ou « système amorceur de polymérisation », on entend un système capable d'initier la polymérisation

des monomères. Il s'agit classiquement d'un composé chimique ayant la capacité de générer des radicaux libre.

Selon un aspect de la présente invention, le système initiateur de polymérisation est choisi dans le groupe consistant en l'eau oxygénée, les persulfates de sodium, les persulfates de potassium, les persulfates d'ammonium, les métabisulfates de sodium, les métabisulfates de potassium, les métabisulfates d'ammonium, les hydroperoxydes et un mélange d'au moins deux de ces composés.

Selon un mode de réalisation de la présente invention, on utilise pour la polymérisation des monomères un mercaptan RSH en tant qu'agent de transfert de chaîne. On cite à titre d'exemple le n-dodécyl mercaptan.

Il est également envisageable dans le cadre de la présente invention d'ajouter à l'émulsion aqueuse polymérique de l'acide 2-acrylamido-2-methylpropane sulfonique. On peut ajouter ce composé à l'étape a4) du procédé ci-dessus décrit.

Selon un mode de réalisation de la présente invention, l'émulsion aqueuse polymérique met en oeuvre, par rapport au poids total de l'émulsion aqueuse polymérique :

i) de 20 à 60 % en poids de monomère d'acide acrylique et/ou d'acide méthacrylique,
ii) de 40 à 80 % en poids de monomères d'acrylate d'alkyle et/ou de méthacrylate d'alkyle,
iii) de 0,5 à 25 % en poids de monomères possédant au moins un groupement hydrophobe, ledit groupement hydrophobe possédant entre 6 et 100 atomes de carbone,

en présence de :

iv) de 0,1 à 10 % en poids d'au moins un polyglycérol de formule (I), et
v) de 0,1 à 10 % en poids d'au moins un tensioactif différent du composé iv).

Selon un mode de réalisation de la présente invention, l'émulsion aqueuse polymérique met en oeuvre, par rapport au poids total de l'émulsion aqueuse polymérique :

i) de 30 à 50 % en poids de monomère d'acide acrylique et/ou d'acide méthacrylique,
ii) de 50 à 70 % en poids de monomères d'acrylate d'alkyle et/ou de méthacrylate d'alkyle,
iii) de 5 à 15 % en poids de monomères possédant au moins un groupement hydrophobe, ledit groupement hydrophobe possédant entre 6 et 100 atomes de carbone,

en présence de :

iv) de 1 à 8 % en poids d'au moins un polyglycérol de formule (I), et
v) de 0,5 à 8 % en poids d'au moins un tensioactif différent du composé iv).

L'émulsion aqueuse polymérique décrite est caractérisée en ce qu'elle présente une masse moléculaire moyenne en poids comprise entre 20 000 g/mol et 1 000 000 g/mol, telle que mesurée par GPC.

Selon un mode de réalisation, l'émulsion aqueuse polymérique décrite est caractérisée en ce qu'elle présente une masse moléculaire moyenne en poids comprise entre 200 000 g/mol et 1 000 000 g/mol, telle que mesurée par GPC.

*Procédé de préparation des particules traitées en surface :*

Un autre objet de la présente invention concerne un procédé de préparation de particules de matières minérales traitées en surface au moyen de l'émulsion aqueuse polymérique ci-dessus mentionnée.

Plus précisément, un objet de la présente invention concerne un procédé de préparation de particules de matière minérale traitées en surface, comprenant les étapes consistant à :

a) on prépare une émulsion aqueuse polymérique par polymérisation de :

i) au moins des monomères d'acide acrylique et/ou d'acide méthacrylique,
ii) au moins des monomère d'acrylate d'alkyle et/ou de méthacrylate d'alkyle,
iii) au moins des monomère possédant au moins un groupement hydrophobe, ledit groupement hydrophobe possédant entre 6 et 40 atomes de carbone, et présentant une formule (II) :

$$R' - A - R'' \qquad (II)$$

dans laquelle :

- A représente une chaîne polymérique constituée de :

  - m motifs d'oxyde d'alkylène de formule $-CH_2CHR_1O-$ avec $R_1$ représentant un groupement alkyle comprenant de 1 à 4 carbones, et m variant de 0 à 150,
  - p motifs d'oxyde d'alkylène de formule $-CH_2CHR_2O-$ avec $R_2$ représentant un groupement alkyle comprenant de 1 à 4 carbones, et p variant de 0 à 150,
  - n motifs d'oxyde d'éthylène avec n variant de 0 à 150,
    dans laquelle m+n+p > 4 et dans laquelle les motifs d'oxyde d'alkylène de formule $-CH_2CHR_1O-$, les motifs d'oxyde d'alkylène de formule - $CH_2CHR_2O-$ et les motifs d'oxyde d'éthylène sont en bloc, alternés ou statistiques ;

- R' représente un radical contenant une fonction insaturée polymérisable, choisi dans le groupe consistant en les esters acryliques, les esters méthacryliques, les esters maléiques, les esters itaconiques, les esters crotoniques, l'acryluréthanne, le méthacryluréthanne, l'α-α' diméthyl-isopropényl-benzyluréthanne, l'allyluréthanne, les éthers allyliques, les éthers vinyliques, les amides et les imides ; et
- R" représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone ;

en présence, pendant ladite polymérisation de :
iv) au moins un polyglycérol de formule (I) :

$$RO - (C_3H_6O_2)_n - H \qquad (I)$$

dans laquelle :

- R représente l'hydrogène, un groupement alkyle ayant de 8 à 22 atomes de carbone ou un groupement ester fonctionnalisé par un groupe alkyle ayant de 8 à 22 atomes de carbone et
- n représente un nombre entier ou décimal supérieur ou égal à 1, et

v) au moins un agent tensio-actif anionique,

b) on dispose de particules de matière minérale, et
c) on met en contact les particules de matière minérale de l'étape b) avec ladite émulsion aqueuse polymérique obtenue à l'étape a).

L'ensemble de la description détaillée concernant l'émulsion aqueuse polymérique s'applique en espèce au procédé de préparation des particules de matière minérale.
Notamment, les définitions des termes «au moins des monomères d'acide acrylique et/ou d'acide méthacrylique » (monomère i)), « au moins des monomères d'acrylate d'alkyle et/ou de méthacrylate d'alkyle » (monomère ii)) et « au moins des monomères possédant au moins un groupement hydrophobe, ledit groupement hydrophobe possédant entre 6 et 100 atomes de carbone » (monomère iii)) sont identiques aux définitions données précédemment concernant l'utilisation de l'émulsion aqueuse pour traiter les particules.

*Particules de matière minérale traitées en surface :*

Un autre objet de la présente invention concerne des particules de matière minérale traitées en surface par une émulsion aqueuse polymérique, ladite émulsion polymérique ayant été obtenue par polymérisation de :

i) au moins des monomères d'acide acrylique et/ou d'acide méthacrylique,
ii) au moins des monomères d'acrylate d'alkyle et/ou de méthacrylate d'alkyle,
iii) au moins des monomères possédant au moins un groupement hydrophobe, ledit groupement hydrophobe possédant entre 6 et 100 atomes de carbone, et présentant une formule (II) :

$$R' - A - R'' \qquad (II)$$

dans laquelle :

- A représente une chaîne polymérique constituée de :

  - m motifs d'oxyde d'alkylène de formule $-CH_2CHR_1O-$ avec $R_1$ représentant un groupement alkyle comprenant de 1 à 4 carbones, et m variant de 0 à 150,
  - p motifs d'oxyde d'alkylène de formule $-CH_2CHR_2O-$ avec $R_2$ représentant un groupement alkyle comprenant de 1 à 4 carbones, et p variant de 0 à 150,
  - n motifs d'oxyde d'éthylène avec n variant de 0 à 150,
    dans laquelle m+n+p > 4 et dans laquelle les motifs d'oxyde d'alkylène de formule $-CH_2CHR_1O-$, les motifs d'oxyde d'alkylène de formule - $CH_2CHR_2O-$ et les motifs d'oxyde d'éthylène sont en bloc, alternés ou statistiques ;

- R' représente un radical contenant une fonction insaturée polymérisable, choisi dans le groupe consistant en les esters acryliques, les esters méthacryliques, les esters maléiques, les esters itaconiques, les esters crotoniques, l'acryluréthanne, le méthacryluréthanne, l'$\alpha$-$\alpha$' diméthyl-isopropényl-benzyluréthanne, l'allyluréthanne, les éthers allyliques, les éthers vinyliques, les amides et les imides ; et
- R" représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone ;

en présence, pendant ladite polymérisation de :
iv) au moins un polyglycérol de formule (I) :

$$RO - (C_3H_6O_2)_n - H \qquad (I)$$

dans laquelle :

- R représente l'hydrogène, un groupement alkyle ayant de 8 à 22 atomes de carbone ou un groupement ester fonctionnalisé par un groupe alkyle ayant de 8 à 22 atomes de carbone et

- n représente un nombre entier ou décimal supérieur à 1,

v) au moins un agent tensio-actif anionique.

L'ensemble de la description détaillée concernant l'émulsion aqueuse polymérique s'applique en espèce aux particules de matière minérale traitées au moyen de cette émulsion.
Selon un mode de réalisation de la présente invention, lesdites particules de matière minérale traitées sont choisies dans le groupe consistant en le talc, le dioxyde de titane, le gypse, le mica, l'alumine, le kaolin, la magnésie, la chaux et un mélange d'au moins deux de ces matières minérales.
Selon un mode de réalisation de la présente invention, lesdites particules de matière minérale traitées sont choisies dans le groupe consistant en le carbonate de calcium (naturel ou précipité) et les dolomies.
Un autre objet de la présente invention concerne des particules de matière minérale traitées en surface telle qu'obtenues par le procédé de préparation des particules tel que ci-dessus décrit.
Selon un mode de réalisation, lesdites particules de matière minérale sont choisies dans le groupe consistant en le talc, le dioxyde de titane, le gypse, le mica, l'alumine, le kaolin, la magnésie, la chaux et un mélange d'au moins deux de ces matières minérales. Selon un mode de réalisation, lesdites particules de matière minérale sont choisies dans le groupe consistant en le carbonate de calcium (naturel ou précipité) et les dolomies, préférablement de la craie et/ou du marbre et/ou du calcaire.

*Autres objets de l'invention :*

Un autre objet encore de la présente invention concerne une formulation aqueuse comprenant les particules de matière minérale traitées telles que ci-dessus décrites. Une telle formulation peut notamment être un adhésif, une peinture aqueuse, un crépi ou un enduit.
Un autre objet encore de la présente invention consiste en l'utilisation des particules de matière minérale traitées décrites ci-dessus pour augmenter la brillance d'un film de peinture.
Les qualités optiques d'un film de peinture peuvent être déclinées selon différentes caractéristiques. Parmi celles-ci, on cite l'opacité, la clarté/luminance et la brillance.
Par « opacité », on entend la capacité d'un film de peinture pour une épaisseur d'application déterminée à

couvrir de manière équivalente un support de couleur noire et un même support de couleur blanche. L'opacité d'un film de peinture est déterminée par la mesure de la luminance lumineuse $Y_n$ d'une couche de peinture d'une épaisseur donnée sur un fond noir, puis de la luminance lumineuse $Y_b$ d'une couche de la même peinture d'une même épaisseur sur un fond blanc. L'opacité est le rapport $Y_n/Y_b$. Pour une épaisseur d'application donnée, l'homme du métier cherche à se rapprocher le plus possible d'une opacité de 1.

Par « clarté » ou « luminance » ou même « clarté-luminance » (en anglais « brightness »), on entend l'indice de clarté du film de peinture déterminée par la mesure de la composante L dans l'espace colorimétrique Lab (L*a*b*), à l'aide d'un spectrophotomètre.

Par « brillance » (en anglais « gloss »), on entend l'indice de brillance du film de peinture déterminée à l'aide d'un brillancemètre. Les brillancemètres illuminent les surfaces à contrôler à l'aide d'une lumière normalisée et suivant un angle normalisé. Ils mesurent ensuite la quantité de lumière diamétralement réfléchie.

Le film de peinture peut être également caractérisé par la mesure du tendu-étalement qui est réalisé selon le test ASTM D-4062.

Selon un aspect de la présente invention, les particules de matière minérale traitées ci-dessus décrites sont utilisées comme agent améliorant la brillance des formulations qui les contiennent.

Par « agent améliorant la brillance d'un film de peinture », on entend un agent qui permet d'obtenir un produit dont la brillance est améliorée, par rapport à un produit qui ne contient pas cet agent. Le produit est en l'espèce un film de peinture qui résulte de l'application d'une épaisseur déterminée d'une formulation aqueuse de peinture. Dans le contexte de la présente invention, le terme « améliorer » signifie augmenter la valeur de la brillance pour une formulation de peinture comprenant une quantité déterminée de particules de matières minérales traitées au moyen de l'émulsion aqueuse polymérique décrite plus haut, par rapport à une valeur de brillance pour une même formulation de peinture qui comprend une même quantité déterminée de particules de matières minérales non traitées.

Selon un mode de réalisation de la présente invention, de telles formulations sont des formulations de peinture qui présentent une concentration particulaire volumique (ci-après CPV) comprise entre 15 et 70 %, par exemple entre 20 et 40 %.

La « concentration particulaire volumique » est définie par la formule suivante :

$$CPV\ (\%) = 100 \text{ x } V_c / (V_c+V_l)$$

avec $V_c$ qui représente le volume des charges minérales et

$V_l$ qui représente le volume de liant dans la formulation de peinture.

Selon au mode de réalisation de la présente invention, les particules de matière minérale traitées, ci-dessus décrites, sont utilisées comme agent améliorant la brillance des formulations comprenant, en tant que charges minérales, des particules de dioxyde de titane $TiO_2$ et des particules de carbonate de calcium $CaCO_3$ traitées en surface au moyen d'une émulsion aqueuse polymérique.

Par « dioxyde de titane » ou « particules de dioxyde de titane », on entend des particules du type rutile ou anatase, telles qu'obtenues par des procédés classiques industriels à partir de minerai, par exemple par un procédé au sulfate ou par un procédé au chlorure.

Selon l'invention, les particules de $TiO_2$ se trouvent sous forme de suspensions, dispersions dans un liquide ou sous forme de poudre. Lorsque le $TiO_2$ se trouve sous forme de poudre, les particules présentent une granulométrie caractérisée par une taille moyenne de particules comprise entre 100 et 500 nm, par exemple comprise entre 200 et 400 nm, par exemple une taille moyenne de 250 nm. De telles particules sont disponibles dans le commerce.

Selon un autre aspect de la présente invention, le copolymère tel que ci-dessus défini est utilisé comme agent améliorant l'activité optique des particules de dioxyde de titane dans une formulation de peinture présentant une concentration particulaire volumique (CPV) comprise entre 15 et 50 %.

Un autre objet enfin de la présente invention consiste en l'utilisation du polyglycérol de formule (I) comme agent tensio-actif de polymérisation pour préparer une émulsion aqueuse polymérique destinée à traiter des particules de matière minérale.

Les exemples qui suivent permettent de mieux appréhender la présente invention, sans pourtant en limiter la portée.

## EXEMPLES

### Exemple 1

Cet exemple a pour objet d'illustrer la préparation d'une émulsion aqueuse polymérique destinée à traiter en

surface des particules de matière minérale.
Plus précisément, ladite émulsion aqueuse a été obtenue par polymérisation (% en poids par rapport au poids total des monomères) :

- de 33,6 % en poids d'acide méthacrylique,
- de 59,4 % en poids d'acrylate d'éthyle,
- de 7,0 % de monomères de formule R'- A - R" (II)

dans laquelle :

A représente une chaîne polymérique constituée de 25 motifs d'oxyde d'éthylène de formule $-CH_2CH_2-O-$
R' représente la fonction méthacrylate
R" représente une chaîne hydrocarbonée, ramifiée, acyclique et non aromatique, plus précisément le 2-hexyldecanyl (16 atomes de carbone),
en présence, pendant ladite polymérisation, d'un polyglycérol-3 de formule (III) avec R qui représente $C_{18}H_{35}$ et n = 2 (Chimexane™ NB),
et d'un agent tensio-actif anionique, le n-dodécylsulfate de sodium.

Dans un réacteur de 1 litre on pèse 288 g d'eau bi permutée, 11,5 g de Chimexane™ et 3,5 g de dodécyl sulfate de sodium. On chauffe en pied de cuve à 72°C ± 2°C.
Pendant ce temps, on prépare une pré-émulsion, en pesant dans un bécher :

- 285 g d'eau bi permutée,
- 3,5 g de dodécyl sulfate de sodium,
- 102 g d'acide méthacrylique,
- 180 g d'acrylate d'éthyle,
- 21 g de macromonomère de formule (I),
- 0,64 g de n-dodecyl mercaptan.

La masse de polyglycérol de formule (I) représente ici 3,8 % de la masse totale du polymère fabriqué. La masse totale de tensio-actif anionique représente ici 2,3 % de la masse totale du polymère fabriqué.
On pèse ensuite 0,95 g de persulfate d'ammonium dilué dans 10 g d'eau bi permutée pour le premier catalyseur, et 0,095 g de métabisulfite de sodium dilué dans 10 g d'eau bi permutée pour le second catalyseur.
Lorsque le pied de cuve est à température, on ajoute les 2 catalyseurs et on effectue la polymérisation pendant 2 heures à 76°C ± 2°C, avec ajout en parallèle de la pré émulsion.
On rince la pompe avec 20 g d'eau bi permutée et on cuit 1 heure à 76°C ± 2°C. On refroidit enfin à température ambiante et on filtre la dispersion ainsi obtenue.
On obtient ainsi une émulsion aqueuse polymérique de masse moléculaire 500 000 g/mol.
La masse moléculaire de l'émulsion aqueuse polymérique est déterminée par GPC.
Une telle technique met en oeuvre un appareil de chromatographie liquide de marque WATERS™ doté d'un détecteur de concentration réfractométrique de marque WATERS™.
L'appareil de chromatographie liquide contient une pompe isocratique (WATERS™ 510) dont le débit est réglé à 0,8 ml/min. L'appareil de chromatographie comprend également un four qui lui-même comprend une colonne linéaire de type MZ-Gel SDplus Linear MZ Analysentechnik™ de 30 cm de long et 8 mm de diamètre intérieur. Le système de détection quant à lui se compose d'un détecteur réfractométrique de type RI WATERS™ 2410. Le four est porté à la température de 35°C, et le réfractomètre est porté à la température de 35°C.
Cet appareillage de chromatographie liquide est doté d'une colonne d'exclusion stérique convenablement choisie afin de séparer les différents poids moléculaires des polymères étudiés. La phase liquide d'élution est une phase organique 100 % THF.
De manière plus précise, selon une première étape, on dilue à 5 mg/ml en l'état la solution de polymérisation dans l'éluant, en l'espèce une solution de THF à 100 %. On filtre ensuite à 0,2 μm la solution ainsi obtenue. 100 μL de cette solution sont ensuite injectés dans l'appareil de chromatographie (éluant : une solution à 100 % de THF). L'appareil de chromatographie est étalonné par 11 étalons de polystyrène allant de 700 à 3 053 000 g/mol de type EasyVial PS-H™ AGILENT POLYMER LABS™.

**Exemple 2**

Cet exemple a pour objet d'illustrer la préparation de particules de $TiO_2$ traitées en surface au moyen d'une

émulsion aqueuse polymérique tel qu'obtenue dans l'exemple 1 ci-dessus.
Plus précisément, un mélangeur du type Guédu de type 4,5NO est préchauffé à 75°C. 1 000 g de $TiO_2$ (Tioxide® RHD2) sont ajoutés au mélangeur. On pulvérise ensuite 50 g de l'émulsion aqueuse obtenue à l'exemple 1 dans le mélangeur sur les particules de dioxyde de titane $TiO_2$. Les particules traitées en surface ainsi obtenues sont caractérisées par un taux de traitement de 1,5 % s/s.
Le mélange est réalisé pendant 4 heures sous agitation minimale.
On obtient des particules de $TiO_2$ traitées en surface.

## Exemple 3

Cet exemple a pour objet d'illustrer la préparation des particules de $CaCO_3$ de la région d'Avignon, France traitées en surface au moyen d'une émulsion aqueuse polymérique tel qu'obtenu dans l'exemple 1 ci-dessus.
Plus précisément, un mélangeur du type Guédu de type 4,5NO est préchauffé à 75°C. 1 000 g de $CaCO_3$ (Omyacoat® 850 OG) sont ajoutés au mélangeur. On pulvérise ensuite 50 g de l'émulsion aqueuse obtenue à l'exemple 1 dans le mélangeur sur les particules de $CaCO_3$. Les particules traitées en surface ainsi obtenues sont caractérisées par un taux de traitement de 1,5 % s/s.
Le mélange est réalisé pendant 4 heures sous agitation minimale.
On obtient des particules de $CaCO_3$ traitées en surface.

## Exemple 4

Cet exemple illustre l'utilisation, partielle ou totale, de particules de matière minérale traitées en surface au moyen d'une émulsion aqueuse polymérique selon l'invention dans une formulation de peinture aqueuse. Lorsque les particules de matière minérale sont non traitées en surface ou partiellement traitées en surface, des épaississants sont ajoutés à la formulation de manière indépendante.
En outre, les peintures sont formulées selon les méthodes connues de l'homme du métier.
Dans le cadre de l'exemple qui suit, les mesures de tendu-étalement, d'opacité, blancheur et brillance se font de la manière suivante :
On dépose une épaisseur de film de 150 $\mu$m à la surface d'un support (carte de contraste Lenetra®) divisé en deux parties : une partie de couleur noire et une partie de couleur blanche.
On attend 48 heures après application du film sur le support stocké dans une salle dont la température et l'hygrométrie sont régulées à 25 $\pm$ 2°C et 45 $\pm$ 5 % d'humidité.
La mesure de l'indice de luminance lumineuse Y du film est réalisé sur le fond noir ($Y_n$), puis sur le fond blanc ($Y_b$). L'opacité est le rapport $Y_n/Y_b$.
On mesure également sur le même support l'indice de clarté du film de peinture déterminée par la mesure de la composante L dans l'espace colorimétrique Lab (L*a*b*), à l'aide d'un spectrophotomètre Spectro pen de la société Dr Lange.
La mesure de brillance est également mesurée sur le même support à l'aide d'un brillance mètre Micro tri-gloss de la société Byk-Gardner à un angle de 60° et 85°.
La mesure de tendu-étalement est réalisée sur la même carte de contraste selon le test ASTM D-4062.
On détermine également la viscosité desdites formulations à différents gradients de vitesse :

- à faible gradient de vitesse, la viscosité Brookfield qui est mesurée à l'aide d'un viscosimètre Brookfield type RVT, dans le flacon non agité, à une température de 25°C et à deux vitesses de rotation de 10 et 100 tours par minute avec le mobile adéquat. La lecture est effectuée après 1 minute de rotation. On obtient ainsi 2 mesures de viscosité Brookfield respectivement notées $\mu_{BK10}$ et $\mu_{BK100}$ (mPa.s) ;
- à moyen gradient de vitesse : la viscosité Stormer, notée $\mu_S$ (Krebs Units) ;
- à haut gradient de vitesse : la viscosité Cone Plan ou viscosité ICI, notée $\mu_I$ (Poises, 1P = 100 mPa.s).

### Essai 1

Cet essai illustre l'utilisation de particules de matière minérale de $TiO_2$ et $CaCO_3$ non traitées en surface et d'un épaississant de l'art antérieur de type cellulosique (Natrosol™ 250 HHR - P) ajouté à la formulation de peinture de manière indépendante.

### Essai 2

Cet essai illustre l'utilisation de particules de matière minérale de $TiO_2$ et $CaCO_3$ non traitées en surface et

d'un épaississant de l'art antérieur de type acrylique (en l'espèce un épaississant de la société Coatex®) ajouté à la formulation de peinture de manière indépendante.

Essai 3

Cet essai illustre l'utilisation de particules de matière minérale de $TiO_2$ et $CaCO_3$ non traitées en surface et d'un épaississant de type émulsion aqueuse polymérique selon l'invention mais ajouté à la formulation de peinture de manière indépendante.

Essai 4

Cet essai illustre l'utilisation de particules de $TiO_2$ traitées en surface obtenues selon l'exemple 2, ainsi que l'utilisation de particules de $CaCO_3$ non traitées en surface et d'un épaississant de type émulsion aqueuse polymérique selon l'invention (obtenu selon l'exemple 1) mais ajouté à la formulation de peinture de manière indépendante.

Essai 5

Cet essai illustre l'utilisation de particules de matières minérales, $TiO_2$ et $CaCO_3$, traitées en surface obtenues respectivement selon l'exemple 2 et l'exemple 3.

**Tableau 1**

| | Essai 1 | Essai 2 | Essai 3 | Essai 4 | Essai 5 |
|---|---|---|---|---|---|
| Constituant de la peinture : | Masse (g) | | | | |
| Eau | 260 | 247 | 247 | 256 | 263,3 |
| Dispersant (Coadis® BR3) | 6,0 | 6,0 | 6,0 | 6,0 | 6,0 |
| Agent anti-mousse (Tegofoamex® 901W) | 3,0 | 3,0 | 3,0 | 3,0 | 3,0 |
| Dispersant ionique (NaOH 20%) | 5,0 | 5,8 | 5,8 | 6,3 | 7,7 |
| Biocide (Acticide® MBS) | 2,0 | 2,0 | 2,0 | 2,0 | 2,0 |
| Epaississant - Natrosol™ 250 HHR - P | **6,0** | - | - | - | - |
| Epaississant acrylique (Coatex®) | - | **18,2** | - | - | - |
| Emulsion selon l'invention | - | - | **18,2** | **8,8** | - |
| $TiO_2$ non traité | 188 | 188 | 188 | - | - |
| $CaCO_3$ non traité | 130 | 130 | 130 | 130 | - |
| $TiO_2$ traité avec émulsion selon l'exemple 1 (1,5 % s/s) | - | - | - | **188** | **188** |
| $CaCO_3$ traité avec émulsion selon l'exemple 1 (1,5 % s/s) | - | - | - | - | **130** |
| Liant (Mowilith® LDM 1871) | 400 | 400 | 400 | 400 | 400 |
| | | | | | |
| Taux épaississant dans la formulation (% s/s) | 0,6 | 0,54 | 0,54 | 0,54 | 0,48 |

Tous les résultats ont été regroupés dans le tableau 2.

Pour chacun des essais, on a déterminé le tendu-étalement, l'opacité, la clarté, la brillance et les viscosités BK $\mu$10, BK $\mu$100, ICI et Stormer, selon les méthodes décrites ci-dessus.

**Tableau 2**

| Essai : | 1 | 2 | 3 | 4 | 5 |
|---|---|---|---|---|---|
| E.S. (%) | 52,4 | 52,3 | 51,9 | 52,1 | 51,8 |
| pH | 9 | 9,1 | 9,1 | 9,1 | 9,1 |
| $\mu_{BK10}$ | 21 000 | 14 600 | 20 500 | 20 300 | 16 000 |

(suite)

| Essai : | 1 | 2 | 3 | 4 | 5 |
|---|---|---|---|---|---|
| $\mu_{BK100}$ | 4 450 | 5 210 | 7 800 | 7 800 | 6 000 |
| $\mu_S$ | 111 | 116 | 136 | 135 | 126 |
| $\mu_I$ | 0,9 | 1,6 | 1,8 | 1,7 | 1,4 |
| Tendu-étalement | 1-2 | 2 | 2-3 | 3 | 3 |
| Opacité | 0,97 | 0,98 | 0,98 | 0,97 | 0,97 |
| Clarté | 98,4 | 98,4 | 98,4 | 98,2 | 97,8 |
| Brillance/blanc - 60° | 18,9 | 19,2 | 20,8 | 22,2 | **41,2** |
| Brillance/blanc - 85° | 52,6 | 47,5 | 50,7 | 54,7 | **80,7** |
| Brillance/noir - 60° | 17,8 | 18,9 | 20,7 | 22,2 | **40,1** |
| Brillance/noir - 85° | 51,5 | 47,5 | 51,4 | 54,4 | **81,8** |

On note que les peintures restent toutes stables au stockage par mesure des viscosités *(résultats non montrés)* à :

1/ T = 1 semaine, température ambiante et
2/ T = 1 semaine, 50°C.

## Revendications

**1.** Utilisation d'une émulsion aqueuse polymérique pour traiter en surface des particules de matière minérale, ladite émulsion aqueuse ayant été obtenue par polymérisation de :

i) au moins des monomères d'acide acrylique et/ou d'acide méthacrylique,
ii) au moins des monomères d'acrylate d'alkyle et/ou de méthacrylate d'alkyle,
iii) au moins des monomères possédant au moins un groupement hydrophobe, ledit groupement hydrophobe de ces monomères comportant entre 6 et 100 atomes de carbone et présentant une formule (II) :

$$R' - A - R'' \qquad (II)$$

dans laquelle :

- A représente une chaîne polymérique constituée de :

  - m motifs d'oxyde d'alkylène de formule $-CH_2CHR_1O-$ avec $R_1$ représentant un groupement alkyle comprenant de 1 à 4 carbones, et m variant de 0 à 150,
  - p motifs d'oxyde d'alkylène de formule $-CH_2CHR_2O-$ avec $R_2$ représentant un groupement alkyle comprenant de 1 à 4 carbones, et p variant de 0 à 150,
  - n motifs d'oxyde d'éthylène avec n variant de 0 à 150,
  dans laquelle m+n+p > 4 et dans laquelle les motifs d'oxyde d'alkylène de formule, $-CH_2CHR_1O-$, les motifs d'oxyde d'alkylène de formule $-CH_2CHR_2O-$ et les motifs d'oxyde d'éthylène sont en bloc, alternés ou statistiques ;

- R' représente un radical contenant une fonction insaturée polymérisable, choisi dans le groupe consistant en les esters acryliques, les esters méthacryliques, les esters maléiques, les esters itaconiques, les esters crotoniques, l'acryluréthanne, le méthacryluréthanne, l'$\alpha$-$\alpha$' diméthyl-isopropényl-benzyluréthanne, l'allyluréthanne, les éthers allyliques, les éthers vinyliques, les amides et les imides ; et
- R" représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone,

en présence, pendant ladite polymérisation de :

iv) au moins un polyglycérol de formule :

$$RO - (C_3H_6O_2)_n - H \qquad (I)$$

dans laquelle :

R représente l'hydrogène, un groupement carboné comportant entre 8 à 22 atomes de carbone ou un groupement ester fonctionnalisé par un groupement carboné comportant entre 8 à 22 atomes de carbone et n représente un nombre entier ou décimal supérieur à 1, et

v) au moins un agent tensio-actif anionique.

**2.** Utilisation selon la revendication 1, selon laquelle les groupements R' et R" du monomère iii) de formule (II) sont tels que :

- R' représente un radical contenant une fonction insaturée polymérisable, appartenant au groupe des esters acrylique, méthacrylique, maléique, itaconique, ou crotonique, et
- R" représente une chaîne hydrocarbonée linéaire, branchée ou ramifiée comprenant de 6 à 40 atomes de carbone.

**3.** Utilisation selon l'une quelconque des revendications précédentes, selon laquelle ladite émulsion aqueuse a été obtenue par polymérisation en présence, pendant ladite polymérisation de :

iv) au moins un polyglycérol de formule (III) :

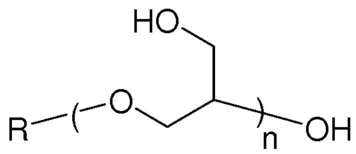

(III)

dans laquelle :

R représente l'hydrogène, un groupement carboné comportant entre 8 à 22 atomes de carbone ou un groupement ester fonctionnalisé par un groupement carboné comportant entre 8 à 22 atomes de carbone et n représente un nombre entier ou décimal supérieur à 1.

**4.** Utilisation selon l'une quelconque des revendications précédentes, selon lequel ledit au moins un agent tensio-actif v) est choisi parmi le dodécyl sulfate de sodium, le di octyl sulfosuccinate de sodium et/ou le dodécyl benzène sulfonate de sodium.

**5.** Utilisation selon l'une quelconque des revendications précédentes, selon lequel ladite polymérisation a lieu en présence d'un agent tensioactif non ionique additionnel qui est différent du composé iv).

**6.** Utilisation selon l'une quelconque des revendications précédentes, selon lequel on met en oeuvre, par rapport au poids totale de l'émulsion aqueuse polymérique :

i) de 20 à 60 % en poids de monomères d'acide acrylique et/ou d'acide méthacrylique,
ii) de 40 à 80 % en poids de monomères d'acrylate d'alkyle et/ou de méthacrylate d'alkyle,
iii) de 0,5 à 25 % en poids de monomères possédant au moins un groupement hydrophobe, ledit groupement hydrophobe de ces monomères comportant entre 6 et 100 atomes de carbone,

en présence :

iv) de 0,1 à 10 % en poids de polyglycérol de formule (I), et
v) de 0,1 à 10 % en poids d'agents tensioactifs différents du composé iv).

**7.** Procédé de préparation de particules de matière minérale traitées en surface, comprenant les étapes consistant à :

a) on prépare une émulsion aqueuse polymérique par polymérisation de :

i) au moins des monomères d'acide acrylique et/ou d'acide méthacrylique,
ii) au moins des monomères d'acrylate d'alkyle et/ou de méthacrylate d'alkyle,
iii) au moins des monomères possédant au moins un groupement hydrophobe, ledit groupement hydrophobe de ces monomères comportant entre 6 et 100 atomes de carbone et présentant une formule (II) :

R'- A - R" (II)

dans laquelle :

- A représente une chaîne polymérique constituée de :
- m motifs d'oxyde d'alkylène de formule $-CH_2CHR_1O-$ avec $R_1$ représentant un groupement alkyle comprenant de 1 à 4 carbones, et m variant de 0 à 150,
- p motifs d'oxyde d'alkylène de formule $-CH_2CHR_2O-$ avec $R_2$ représentant un groupement alkyle comprenant de 1 à 4 carbones, et p variant de 0 à 150,
- n motifs d'oxyde d'éthylène avec n variant de 0 à 150,
dans laquelle m+n+p > 4 et dans laquelle les motifs d'oxyde d'alkylène de formule, $-CH_2CHR_1O-$, les motifs d'oxyde d'alkylène de formule $-CH_2CHR_2O-$ et les motifs d'oxyde d'éthylène sont en bloc, alternés ou statistiques ;
- R' représente un radical contenant une fonction insaturée polymérisable, choisi dans le groupe consistant en les esters acryliques, les esters méthacryliques, les esters maléiques, les esters itaconiques, les esters crotoniques, l'acryluréthanne, le méthacryluréthanne, l'$\alpha$-$\alpha$' diméthyl-isopropényl-benzyluréthanne, l'allyluréthanne, les éthers allyliques, les éthers vinyliques, les amides et les imides ; et
- R" représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone,

en présence, pendant ladite polymérisation de :

iv) au moins un polyglycérol de formule :

$$RO - (C_3H_6O_2)_n - H \qquad (I)$$

dans laquelle :

R représente l'hydrogène, un groupement carboné comportant entre 8 à 22 atomes de carbone ou un groupement ester fonctionnalisé par un groupement carboné comportant entre 8 à 22 atomes de carbone et n représente un nombre entier ou décimal supérieur à 1, et

v) au moins un agent tensio-actif anionique,

b) on dispose de particules de matière minérale, et
c) on met en contact les particules de matière minérale de l'étape b) avec ladite émulsion aqueuse polymérique obtenue à l'étape a).

**8.** Particules de matière minérale traitées en surface par une émulsion aqueuse polymérique, ladite émulsion polymérique ayant été obtenue par polymérisation de :

i) au moins des monomères d'acide acrylique et/ou d'acide méthacrylique,
ii) au moins des monomères d'acrylate d'alkyle et/ou de méthacrylate d'alkyle,
iii) au moins des monomères possédant au moins un groupement hydrophobe, ledit groupement hydrophobe de ces monomères comportant entre 6 et 100 atomes de carbone et présentant une formule (II) :

R'- A - R" (II)

dans laquelle :

- A représente une chaîne polymérique constituée de :

- m motifs d'oxyde d'alkylène de formule $-CH_2CHR_1O-$ avec $R_1$ représentant un groupement alkyle comprenant de 1 à 4 carbones, et m variant de 0 à 150,
- p motifs d'oxyde d'alkylène de formule $-CH_2CHR_2O-$ avec $R_2$ représentant un groupement alkyle comprenant de 1 à 4 carbones, et p variant de 0 à 150,
- n motifs d'oxyde d'éthylène avec n variant de 0 à 150,
dans laquelle m+n+p > 4 et dans laquelle les motifs d'oxyde d'alkylène de formule,
$-CH_2CHR_1O-$, les motifs d'oxyde d'alkylène de formule $-CH_2CHR_2O-$ et les motifs d'oxyde d'éthylène sont en bloc, alternés ou statistiques ;

- R' représente un radical contenant une fonction insaturée polymérisable, choisi dans le groupe consistant en les esters acryliques, les esters méthacryliques, les esters maléiques, les esters itaconiques, les esters crotoniques, l'acryluréthanne, le méthacryluréthanne, l'$\alpha$-$\alpha$' diméthyl-isopropényl-benzyluréthanne, l'allyluréthanne, les éthers allyliques, les éthers vinyliques, les amides et les imides ; et
- R" représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone,

en présence, pendant ladite polymérisation de :

iv) au moins un polyglycérol de formule (I) :

$$RO - (C_3H_6O_2)_n - H \qquad (I)$$

dans laquelle :

R représente l'hydrogène, un groupement carboné comportant entre 8 à 22 atomes de carbone ou un groupement ester fonctionnalisé par un groupement carboné comportant entre 8 à 22 atomes de carbone et

v) au moins un agent tensio-actif anionique.

**9.** Formulation aqueuse comprenant les particules de matière minérale traitées selon la revendication 8.

**10.** Utilisation des particules de matière minérale traitées selon la revendication 9, pour augmenter la brillance d'un film de peinture.

**11.** Utilisation du polyglycérol de formule (I) comme agent tensio-actif de polymérisation pour préparer une émulsion aqueuse polymérique destinée à traiter des particules de matière minérale.

## Patentansprüche

**1.** Verwendung einer wässrigen Polymeremulsion zur Oberflächenbehandlung von Teilchen aus anorganischem Material, wobei die wässrige Emulsion durch Polymerisation von:

i) mindestens Acrylsäure- und/oder Methacrylsäure-Monomeren,
ii) mindestens Alkylacrylat- und/oder Alkylmethacrylat-Monomeren,
iii) mindestens Monomeren mit mindestens einer hydrophoben Gruppe, wobei die hydrophobe Gruppe dieser Monomere zwischen 6 und 100 Kohlenstoffatome enthält und eine Formel (II) aufweist:

R'- A - R" (II)

in der:

- A für eine Polymerkette aus:

  - m Alkylenoxid-Einheiten der Formel $-CH_2CHR_1O-$, wobei $R_1$ für eine Alkylgruppe mit 1 bis 4 Kohlenstoffatomen steht und m von 0 bis 150 variiert,
  - p Alkylenoxid-Einheiten der Formel $-CH_2CHR_2O-$, wobei $R_2$ für eine Alkylgruppe mit 1 bis 4 Kohlenstoffatomen steht und p von 0 bis 150 variiert,
  - n Ethylenoxid-Einheiten, wobei n von 0 bis 150 variiert,

  wobei m+n+p > 4 und wobei die Alkylenoxid-Einheiten der Formel $-CH_2CHR_1O-$, die Alkylenoxid-Einheiten der Formel $-CH_2CHR_2O-$ und die Ethylenoxid-Einheiten blockartig, alternierend oder zufällig vorliegen;

steht;
- R' für einen Rest mit einer polymerisierbaren ungesättigten Funktion aus der Gruppe bestehend aus Acrylsäureestern, Methacrylsäureestern, Maleinsäureestern, Itaconsäureestern, Crotonsäureestern, Acrylurethan, Methacrylurethan, $\alpha,\alpha'$-Dimethyl-isopropenyl-benzylurethan, Allylurethan, Allylethern, Vinylethern, Amiden und Imiden steht; und
- R" für eine lineare, verzweigte oder verästelte Kohlenwasserstoffkette mit 6 bis 40 Kohlenstoffatomen oder eine substituierte oder unsubstituierte Cycloalkyl- oder Arylgruppe mit 6 bis 100 Kohlenstoffatomen steht,

in Gegenwart von:

iv) mindestens einem Polyglycerin der Formel:

$$RO - (C_3H_6O_2)_n - H \qquad (I)$$

in der:

R für Wasserstoff, eine Kohlenstoffgruppe mit 8 bis 22 Kohlenstoffatomen oder eine durch eine Kohlenstoffgruppe mit 8 bis 22 Kohlenstoffatomen funktionalisierte Estergruppe steht und
n für eine ganze Zahl oder Dezimalzahl größer 1 steht, und

v) mindestens einem anionischem Tensid

während der Polymerisation erhalten wurde.

**2.** Verwendung nach Anspruch 1, wobei die Gruppen R' und R" des Monomers iii) der Formel (II) so beschaffen sind, dass:

- R' für einen Rest mit einer polymerisierbaren ungesättigten Funktion aus der Gruppe der Acrylsäure-, Methacrylsäure-, Maleinsäure-, Itaconsäure- oder Crotonsäureester steht und
- R" für eine lineare, verzweigte oder verästelte Kohlenwasserstoffgruppe mit 6 bis 40 Kohlenstoffatomen steht.

**3.** Verwendung nach einem der vorhergehenden Ansprüche, wobei die wässrige Emulsion durch Polymerisation in Gegenwart von:

iv) mindestens einem Polyglycerin der Formel (III):

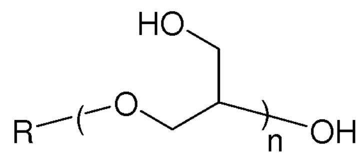

(III)

in der:

R für Wasserstoff, eine Kohlenstoffgruppe mit 8 bis 22 Kohlenstoffatomen oder eine durch eine Kohlenstoffgruppe mit 8 bis 22 Kohlenstoffatomen funktionalisierte Estergruppe steht und
n für eine ganze Zahl oder Dezimalzahl größer 1 steht,
während der Polymerisation erhalten wurde.

**4.** Verwendung nach einem der vorhergehenden Ansprüche, wobei das mindestens eine Tensid v) aus Natriumdodecylsulfat, Natriumdioctylsulfosuccinat und/oder Natriumdodecylbenzolsulfonat ausgewählt ist.

**5.** Verwendung nach einem der vorhergehenden Ansprüche, wobei die Polymerisation in Gegenwart eines zusätzlichen nichtionischen Tensids, das von der Verbindung iv) verschieden ist, erfolgt.

**6.** Verwendung nach einem der vorhergehenden Ansprüche, gemäß der, bezogen auf das Gesamtgewicht der wässrigen Polymeremulsion:

i) 20 bis 60 Gew.-% Acrylsäure- und/oder Methacrylsäure-Monomere,
ii) 40 bis 80 Gew.-% Alkylacrylat- und/oder Alkylmethacrylat-Monomere,
iii) 0,5 bis 25 % Monomere mit mindestens einer hydrophoben Gruppe, wobei die hydrophobe Gruppe dieser Monomere 6 bis 100 Kohlenstoffatome enthält,

in Gegenwart:

iv) von 0,1 bis 10 Gew.-% Polyglycerin der Formel (I) und
v) 0,1 bis 10 Gew.-% Tensiden, die von der Verbindung iv) verschieden sind, eingesetzt werden.

**7.** Verfahren zur Herstellung von oberflächenbehandelten Teilchen aus anorganischem Material, das folgende Schritte umfasst:

a) Herstellen einer wässrigen Polymeremulsion durch Polymerisation von:

i) mindestens Acrylsäure- und/oder Methacrylsäure-Monomeren,
ii) mindestens Alkylacrylat- und/oder Alkylmethacrylat-Monomeren,
iii) mindestens Monomeren mit mindestens einer hydrophoben Gruppe, wobei die hydrophobe Gruppe dieser Monomere zwischen 6 und 100 Kohlenstoffatome enthält und eine Formel (II) aufweist:

$$R'\text{-}A\text{-}R'' \qquad (II)$$

in der:

- A für eine Polymerkette aus:

- m Alkylenoxid-Einheiten der Formel $-CH_2CHR_1O-$, wobei $R_1$ für eine Alkylgruppe mit 1 bis 4 Kohlenstoffatomen steht und m von 0 bis 150 variiert,
- p Alkylenoxid-Einheiten der Formel $-CH_2CHR_2O-$, wobei $R_2$ für eine Alkylgruppe mit 1 bis 4 Kohlenstoffatomen steht und p von 0 bis 150 variiert,
- n Ethylenoxid-Einheiten, wobei n von 0 bis 150 variiert,
wobei m+n+p > 4 und wobei die Alkylenoxid-Einheiten der Formel $-CH_2CHR_1O-$, die Alkylenoxid-Einheiten der Formel $-CH_2CHR_2O-$ und die Ethylenoxid-Einheiten blockartig, alternierend oder zufällig vorliegen;

steht;
- R' für einen Rest mit einer polymerisierbaren ungesättigten Funktion aus der Gruppe bestehend aus Acrylsäureestern, Methacrylsäureestern, Maleinsäureestern, Itaconsäureestern, Crotonsäureestern, Acrylurethan, Methacrylurethan, $\alpha,\alpha'$-Dimethyl-isopropenyl-benzylurethan, Allylurethan, Allylethern, Vinylethern, Amiden und Imiden steht; und
- R" für eine lineare, verzweigte oder verästelte Kohlenwasserstoffkette mit 6 bis 40 Kohlenstoffatomen oder eine substituierte oder unsubstituierte Cycloalkyl- oder Arylgruppe mit 6 bis 100 Kohlenstoffatomen

steht,

in Gegenwart von:

iv) mindestens einem Polyglycerin der Formel:

$$RO - (C_3H_6O_2)_n - H \qquad (I)$$

in der:

R für Wasserstoff, eine Kohlenstoffgruppe mit 8 bis 22 Kohlenstoffatomen oder eine durch eine Kohlenstoffgruppe mit 8 bis 22 Kohlenstoffatomen funktionalisierte Estergruppe steht und
n für eine ganze Zahl oder Dezimalzahl größer 1 steht, und

v) mindestens einem anionischem Tensid

während der Polymerisation,
b) Bereitstellen von Teilchen aus anorganischem Material und
c) Inkontaktbringen der Teilchen aus anorganischem Material aus Schritt b) mit der in Schritt a) erhaltenen wässrigen Polymeremulsion.

**8.** Teilchen aus anorganischem Material, oberflächenbehandelt mit einer wässrigen Polymeremulsion, wobei die Polymeremulsion durch Polymerisation von:

i) mindestens Acrylsäure- und/oder Methacrylsäure-Monomeren,
ii) mindestens Alkylacrylat- und/oder Alkylmethacrylat-Monomeren,
iii) mindestens Monomeren mit mindestens einer hydrophoben Gruppe, wobei die hydrophobe Gruppe dieser Monomere zwischen 6 und 100 Kohlenstoffatome enthält und eine Formel (II) aufweist:

$$R' - A - R'' \qquad (II)$$

in der:

- A für eine Polymerkette aus:

- m Alkylenoxid-Einheiten der Formel $-CH_2CHR_1O-$, wobei $R_1$ für eine Alkylgruppe mit 1 bis 4 Kohlenstoffatomen steht und m von 0 bis 150 variiert,
- p Alkylenoxid-Einheiten der Formel $-CH_2CHR_2O-$, wobei $R_2$ für eine Alkylgruppe mit 1 bis 4 Kohlenstoffatomen steht und p von 0 bis 150 variiert,
- n Ethylenoxid-Einheiten, wobei n von 0 bis 150 variiert,
wobei $m+n+p > 4$ und wobei die Alkylenoxid-Einheiten der Formel $-CH_2CHR_1O-$, die Alkylenoxid-Einheiten der Formel $-CH_2CHR_2O-$ und die Ethylenoxid-Einheiten blockartig, alternierend oder zufällig vorliegen;

steht;
- R' für einen Rest mit einer polymerisierbaren ungesättigten Funktion aus der Gruppe bestehend aus Acrylsäureestern, Methacrylsäureestern, Maleinsäureestern, Itaconsäureestern, Crotonsäureestern, Acrylurethan, Methacrylurethan, $\alpha,\alpha'$-Dimethyl-isopropenyl-benzylurethan, Allylurethan, Allylethern, Vinylethern, Amiden und Imiden steht; und
- R" für eine lineare, verzweigte oder verästelte Kohlenwasserstoffkette mit 6 bis 40 Kohlenstoffatomen oder eine substituierte oder unsubstituierte Cycloalkyl- oder Arylgruppe mit 6 bis 100 Kohlenstoffatomen steht,

in Gegenwart von:

iv) mindestens einem Polyglycerin der Formel (I):

$$RO - (C_3H_6O_2)_n - H \qquad (I)$$

in der:

R für Wasserstoff, eine Kohlenstoffgruppe mit 8 bis 22 Kohlenstoffatomen oder eine durch eine Kohlenstoffgruppe mit 8 bis 22 Kohlenstoffatomen funktionalisierte Estergruppe steht und

v) mindestens einem anionischem Tensid

während der Polymerisation erhalten wurde.

**9.** Wässrige Formulierung, umfassend die behandelten Teilchen aus anorganischem Material nach Anspruch 8.

**10.** Verwendung der behandelten Teilchen aus anorganischem Material nach Anspruch 9 zur Erhöhung des Glanzes eines Lackfilms.

**11.** Verwendung des Polyglycerins der Formel (I) als Polymerisationstensid zur Herstellung einer wässrigen Polymeremulsion zur Behandlung von Teilchen aus anorganischem Material.

## Claims

**1.** Use of a polymeric aqueous emulsion for surface treating particles of mineral matter, said aqueous emulsion having been obtained by polymerization of:

i) at least some acrylic acid and/or methacrylic acid monomers,
ii) at least some alkyl acrylate and/or alkyl methacrylate monomers,
iii) at least some monomers having at least one hydrophobic group, said hydrophobic group of these monomers comprising between 6 and 100 carbon atoms and having a formula (II):

$$R'- A - R'' \qquad (II)$$

in which:

- A represents a polymeric chain composed of:

  - m alkylene oxide units of formula $-CH_2CHR_1O-$ where $R_1$ represents an alkyl group comprising from 1 to 4 carbons, and m ranging from 0 to 150,
  - p alkylene oxide units of formula $-CH_2CHR_2O-$ where $R_2$ represents an alkyl group comprising from 1 to 4 carbons, and p ranging from 0 to 150,
  - n ethylene oxide units where n ranging from 0 to 150,
  wherein m+n+p > 4 and wherein the alkylene oxide units of formula, $-CH_2CHR_1O-$, the alkylene oxide units of formula $-CH_2CHR_2O-$ and the ethylene oxide units are in block, alternated or random;

- R' represents a radical containing a polymerizable unsaturated function, selected from the group consisting of acrylic esters, methacrylic esters, maleic esters, itaconic esters, crotonic esters, acrylurethane, methacrylurethane, $\alpha$-$\alpha$'-dimethyl-isopropenyl-benzylurethane, allylurethane, allylic ethers, vinylic ethers, amides and imides; and
- R" represents a linear, branched or ramified hydrocarbon chain comprising from 6 to 40 carbon atoms or a substituted or unsubstituted cycloalkyl or aryl group, comprising from 6 to 100 carbon atoms,

in the presence, during said polymerization of:

iv) at least one polyglycerol of formula:

$$RO - (C_3H_6O_2)_n - H \qquad (I)$$

in which:

R represents hydrogen, a carbon group comprising between 8 to 22 carbon atoms or an ester group functionalized by a carbon group comprising between 8 to 22 carbon atoms and
n represents an integer or decimal number greater than 1, and

v) at least one anionic surfactant agent.

**2.** Use according to claim 1, wherein groups R' and R" of the monomer iii) of formula (II) are such that:

- R' represents a radical containing a polymerizable unsaturated function, belonging to the group of acrylic, methacrylic, maleic, itaconic, or crotonic esters, and
- R" represents a linear, branched or ramified hydrocarbon chain comprising from 6 to 40 carbon atoms.

**3.** Use according to any one of the previous claims, wherein said aqueous emulsion has been obtained by polymerization in the presence, during said polymerization, of:

iv) at least one polyglycerol of formula (III):

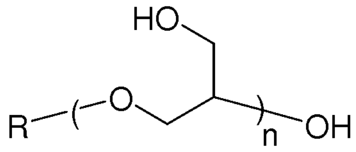

(III)

in which:

R represents hydrogen, a carbon group comprising between 8 to 22 carbon atoms or an ester group functionalized by a carbon group comprising between 8 to 22 carbon atoms and
n represents an integer or decimal number greater than 1.

**4.** Use according to any one of the previous claims, wherein said at least one surfactant agent v) is selected from sodium dodecyl sulfate, sodium dioctyl sulfosuccinate and/or sodium dodecyl benzene sulfonate.

**5.** Use according to any one of the previous claims, wherein said polymerization takes place in the presence of an additional non-ionic surfactant agent which is different from the compound iv).

**6.** Use according to any one of the previous claims, wherein it is implemented, relative to the total weight of the polymeric aqueous emulsion:

i) from 20% to 60% by weight of acrylic acid and/or methacrylic acid monomers,
ii) from 40% to 80% by weight of alkyl acrylate and/or alkyl methacrylate monomers,
iii) from 0.5% to 25% by weight of monomers having at least one hydrophobic group, said hydrophobic group of these monomers comprising between 6 and 100 carbon atoms,

in the presence :

iv) of 0.1% to 10% by weight of polyglycerol of formula (I), and
v) of 0.1% to 10% by weight of surfactant agents different from the compound iv).

**7.** Method for preparing surface treated particles of mineral matter, comprising the steps of consisting in:

a) preparing a polymeric aqueous emulsion by polymerization of:

i) at least some acrylic acid and/or methacrylic acid monomers,
ii) at least some alkyl acrylate and/or alkyl methacrylate monomers,
iii) at least some monomers having at least one hydrophobic group, said hydrophobic group of these monomers comprising between 6 and 100 carbon atoms and having a formula (II):

R'- A - R" (II)

in which:

- A represents a polymeric chain composed of:

- m alkylene oxide units of formula $-CH_2CHR_1O-$ where $R_1$ represents an alkyl group comprising from 1 to 4 carbons, and m ranging from 0 to 150,
- p alkylene oxide units of formula $-CH_2CHR_2O-$ where $R_2$ represents an alkyl group comprising from 1 to 4 carbons, and p ranging from 0 to 150,
- n ethylene oxide units where n ranging from 0 to 150,
wherein m+n+p > 4 and wherein the alkylene oxide units of formula, $-CH_2CHR_1O-$, the alkylene oxide units of formula $-CH_2CHR_2O-$ and the ethylene oxide units are in block, alternated or random;

- R' represents a radical containing a polymerizable unsaturated function selected from the group consisting of acrylic esters, methacrylic esters, maleic esters, itaconic esters, crotonic esters, acrylurethane, methacrylurethane, α-α'-dimethyl-isopropenyl-benzylurethane, allylurethane, allylic ethers, vinylic ethers, amides and imides; and
- R" represents a linear, branched or ramified hydrocarbon chain comprising from 6 to 40 carbon atoms, or a substituted or unsubstituted cycloalkyl or aryl roup comprising from 6 to 100 carbon atoms,

in the presence, during said polymerization of:

iv) at least one polyglycerol of formula:

$$RO - (C_3H_6O_2)_n - H \qquad (I)$$

in which:

R represents hydrogen, a carbon group comprising between 8 to 22 carbon atoms or an ester group functionalized by a carbon group comprising between 8 to 22 carbon atoms and
n represents an integer or decimal number greater than 1, and

v) at least one anionic surfactant agent,

b) arranging particles of mineral matter, and
c) contacting the particles of mineral matter from step b) with said polymeric aqueous emulsion obtained in step a).

**8.** Particles of mineral matter surface treated by a polymeric aqueous emulsion, said polymeric emulsion having been obtained by polymerization of:

i) at least some acrylic acid and/or methacrylic acid monomers,
ii) at least some alkyl acrylate and/or alkyl methacrylate monomers,
iii) at least some monomers having at least one hydrophobic group, said hydrophobic group of these monomers comprising between 6 and 100 carbon atoms and having a formula (II):

R'- A - R" (II)

in which:

- A represents a polymeric chain composed of:

- m alkylene oxide units of formula $-CH_2CHR_1O-$ where $R_1$ represents an alkyl group comprising from 1 to 4 carbons, and m ranging from 0 to 150,
- p alkylene oxide units of formula $-CH_2CHR_2O-$ where $R_2$ represents an alkyl group comprising from 1 to 4 carbons, and p ranging from 0 to 150,
- n ethylene oxide units where n ranging from 0 to 150, wherein m+n+p > 4 and wherein the alkylene

oxide units of formula $-CH_2CHR_1O-$, the alkylene oxide units of formula $-CH_2CHR_2O-$ and the ethylene oxide units are in block, alternated or random;

- R' represents a radical containing a polymerizable unsaturated function selected from the group consisting of acrylic esters, methacrylic esters, maleic esters, itaconic esters, crotonic esters, acrylurethane, methacrylurethane, α-α'-dimethyl-isopropenyl-benzylurethane, allylurethane, allylic ethers, vinylic ethers, amides and imides; and
- R" represents a linear, branched or ramified hydrocarbon chain comprising from 6 to 40 carbon atoms, or a substituted or unsubstituted cycloalkyl or aryl group, comprising from 6 to 100 carbon atoms,

in the presence, during said polymerization of:

iv) at least one polyglycerol of formula (I):

$$RO - (C_3H_6O_2)_n - H \qquad (I)$$

in which:

R represents hydrogen, a carbon group comprising between 8 to 22 carbon atoms or an ester group functionalized by a carbon group comprising between 8 to 22 carbon atoms and

v) at least one anionic surfactant agent.

**9.** Aqueous formulation comprising the treated particles of mineral matter according to claim 8.

**10.** Use of treated particles of mineral matter according to claim 9, for enhancing the gloss of a paint film.

**11.** Use of the polyglycerol of formula (I) as surfactant agent of polymerization for preparing a polymeric aqueous emulsion intended for treatment of particles of mineral matter.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0577526 A1
- EP 1778797 A1
- EP 2108007 A1
- EP 2114378 A1
- EP 2303982 A1
- FR 2950061 A1
- FR 2956862 A1
- US 20110107803 A
- WO 2010001206 A
- WO 2013064761 A
- WO 2013064763 A